Europäisches Patentamt

European Patent Office

Office européen des brevets

(11) Publication number: **0 241 297**
**A2**

(12) # EUROPEAN PATENT APPLICATION

(21) Application number: **87303125.6**

(22) Date of filing: **09.04.87**

(51) Int. Cl.⁴: **B 29 C 63/46**

(30) Priority: **11.04.86 GB 8608805**

(43) Date of publication of application:
**14.10.87 Bulletin 87/42**

(84) Designated Contracting States:
**AT BE CH DE ES FR GB GR IT LI LU NL SE**

(71) Applicant: **Du Pont (UK) Limited**
**Hilcote Plant P.O. Box 1**
**Blackwell Derbyshire (GB)**

(72) Inventor: **Hanover, Finn**
**2115 Meadow Lane**
**Wilmington Delaware 19810 (US)**

(74) Representative: **Jones, Alan John**
**CARPMAELS & RANSFORD 43 Bloomsbury Square**
**London, WC1A 2RA (GB)**

(54) **Method of producing a thermoplastic polymerlined pipe.**

(57) A length of non-irradiated polythene pipe 12 is heated and stretched and then inserted in an iron or other pipe which is to be lined, leaving 15% exposed.

A radiant heater 37, 39, mounted on a sledge 35 is then pulled through the liner 12 to cause it to expand. The heater is sealed by travelling seals 50, 54 and air is circulated by a blower 43 and perforated pipe 46.

Fig. 5

EP 0 241 297 A2

## Description

## METHOD OF PRODUCING A THERMOPLASTIC POLYMER-LINED PIPE

This invention relates to a method for lining tubular structures such as pipe, particularly, but not exclusively, long lengths of pipe in situ such as underground gas or water mains.

Metal pipes may be lined with thermoplastic polymers to convey corrosive materials such as acids or the lining may be used simply to rehabilitate or prolong the life of old, existing water or gas supply pipes or other pipes which may carry relatively non-corrosive fluids.

It has been proposed in U.S. Patent 3429954 to line metal pipe by inserting into a pipe a longitudinally oriented heat shrinkable, irradiated thermoplastic polymer tubing, the tubing having in its unoriented state an outer diameter greater than the internal diameter of the metal pipe but slightly smaller than the internal diameter when oriented, and heating the tubing to a temperature above the crystalline melting point of the polymer to longitudinally shrink the polymer tubing and cause it to expand radially and fit tightly against the internal wall of the pipe.

The polymer tubings employed in U.S. Patent 3429954 were irradiated to cross-link the polymer. This, however, precludes in most cases the use of such pipe from lining long continuous lengths of underground metal pipe where sections of polymer lines must be joined by butt fusion or butt solvent welding to make up the entire length. Cross-linked polymers cannot with confidence be joined by fusion or solvent welding and are inferior in this respect to non-crosslined straight thermoplastic polymers.

In the U.S. Patent it is suggested also that the same polymer liners be expanded by heating using one of three methods.

(a) application of hot air internally
(b) passing the polymer lined pipe through a furnace so as to apply heat externally
(c) immersing the polymer lined pipe in a propylene glycol bath.

While methods (b) and (c) for obvious reasons are impractical for the relining of long, continuous lengths of underground pipe, method (a) is not effective either because in long pipe sections the air or any other gas or fluid will cool rapidly as it progresses along the pipe and there will be insufficient heat to raise the entire length of the polymer liners to the necessary temperatures.

A further problem in the lining of long lengths of metal pipe is that to achieve the proper expansion of the polymer liners inside the metal pipe the liner must be completely free to shrink in the longitudinal direction. If the shrinkage is prevented or only slightly hindered in any way, it will result in no or only a reduced and insufficient expansion.

In particular where long, continuous lengths of pipe are to be lined, problems arise where the weight and associated frictional drag of the long lengths of the lining itself, inside the metal pipe tends to prevent the required shrinkage. This situation may be further aggravated where the metal pipe is not completely straight and the liner becomes pinched or where the polymer liner during the expansion process itself expands unevenly or at a different rate either at various points along the length of the liner where it may tend to hang up, or around the periphery of the liner where this may cause the liner to curve in the length direction inside the metal pipe.

It is the object of this invention to provide a method particularly for lining long lengths of underground pipe that will overcome all of the above mentioned difficulties and problems.

According to the present invention, a method of lining tubular structures such as pipes comprises the step of inserting into the tubular structure one or more sections of heat expandible liner having an outside diameter less than the internal diameter of the pipe, the liner being made of non-cross-linked thermoplastic polymer which, when freely or fully expanded, would have an outside diameter greater than the internal diameter of the tubular structure.

Preferably the outside diameter of the unexpanded liner is 5 to 12% smaller than the inside diameter of the tubular structure.

Successive sections of the heat expandible liner may be joined by butt heat fusion or butt solvent welding without affecting the outside diameter of the heat expandible pipe and removing all inside and outside fusion beads.

Thus by successively joining sections it is possible to insert into the metal pipe the total length of the heat expandible liner which should be (10 to 25%) longer than the metal pipe to allow for longitudinal shrinkage which will vary depending on the required expansion.

To expand the liner it is preferably heated from the inside of the liner with a radiant infra-red heater. The heater may be designed in such a way that the rate of temperature rise around the circumferential periphery of the liner is approximately uniform.

The radiant heater may be inserted into the liner, either to an intermediate point or at the end of the pipe, and moved through the pipe towards an open end from said intermediate point or from said one end at a rate such as to allow for full expansion of the polymer liner into contact with the internal surface of the pipe. The method of moving the heating zone from an intermediate point or from one end is to ensure that the longitudinal shrinkage which is associated with radial expansion can take place unhindered.

Optionally an axial force may be applied at the free end of the polymer pipe so as to overcome frictional drag forces from the weight of the not yet expanded section of the liner, to overcome the resistance forces from pinch points along the pipe and in this way assist in the movement of the unexpanded liner section to accomplish the required axial shrinkage. Preferably this axial force should produce slight axial compression in the zone of the expansion during the entire operation.

In accordance with another aspect of the present invention a method of lining a pipe with a thermoplastic copolymer comprises:-

(a) selecting a tubular copolymer liner of outside diameter greater than the internal diameter of the pipe

(b) heating and stretching the tubular copolymer lining until its outside diameter is less than the internal diameter of the pipe

(c) inserting the tubular copolymer lining into the pipe

(d) inserting a radiant heater into the lining either to an intermediate point or to one end of the pipe

(e) moving the radiant heater through the pipe towards an open end from said intermediate point or from said one end at a rate such as to allow for full expansion of the copolymer lining as it changes from a heat unstable to a heat stable state.

A suitable expandible polyethylene liner can be made from a tubular polyethylene billet with an outside diameter slightly larger than that of the internal diameter of the metal pipe by:

(a) heating the billet to a temperature in the range 105 to 120°C about 10 to 20°C below its crystalline melting point

(b) stretching the tubular billet at this temperature in the range $1.3 \times$ to $1.7 \times$ its original length

(c) cooling the stretched tube under tension to room temperature

(d) relieving the tension and permitting the tube to relax for a period of time (usually 2 to 3 days) until the dimension remains stable.

The invention may be used with both thin and thick-walled liners.

The radiant heater may, for example, be in the form of a rod or bar supported at one end on a carriage which is shaped to conform to the shape of the liner and is slid along the liner.

Thermoplastic copolymers which may be used in the practice of this invention include any such copolymers which are capable of being stretched and then heated again so that they return to their original size automatically. Specific examples include homopolymers such as polythene, polypropylene, polybutene; copolymers of ethylene and vinyl esters of aliphatic carboxylic acids such as vinyl acetate and vinyl propionate; copolymers of ethylene and alkyl acrylate and methyl methacrylate; copolymers of ethylene and other alpha-olefins such as propylene, butene, hexene and octene copolymers of ethylene and ethylenically unsaturated carbocylic acids such as acrylic acid, methacrylic acid and the like.

A preferred material is polyethylene, manufactured by Du Pont under the Trade Mark ALATHON although other polyolefines may equally be used.

In the accompanying drawings:-

Figure 1 illustrates in diagrammatic sectional form practice of the method of this invention in lining an underground pipe;

Figure 2 is an enlarged section on line 2--2;

Figure 3 is a scrap portion of Figure 1 modified to show a different method of applying axial pressure to the thermoplastic liner;

Figure 4 is a section through a pipe and liner showing a modified radiant heater; and

Figure 5 illustrates an alternative form of heater located within a liner.

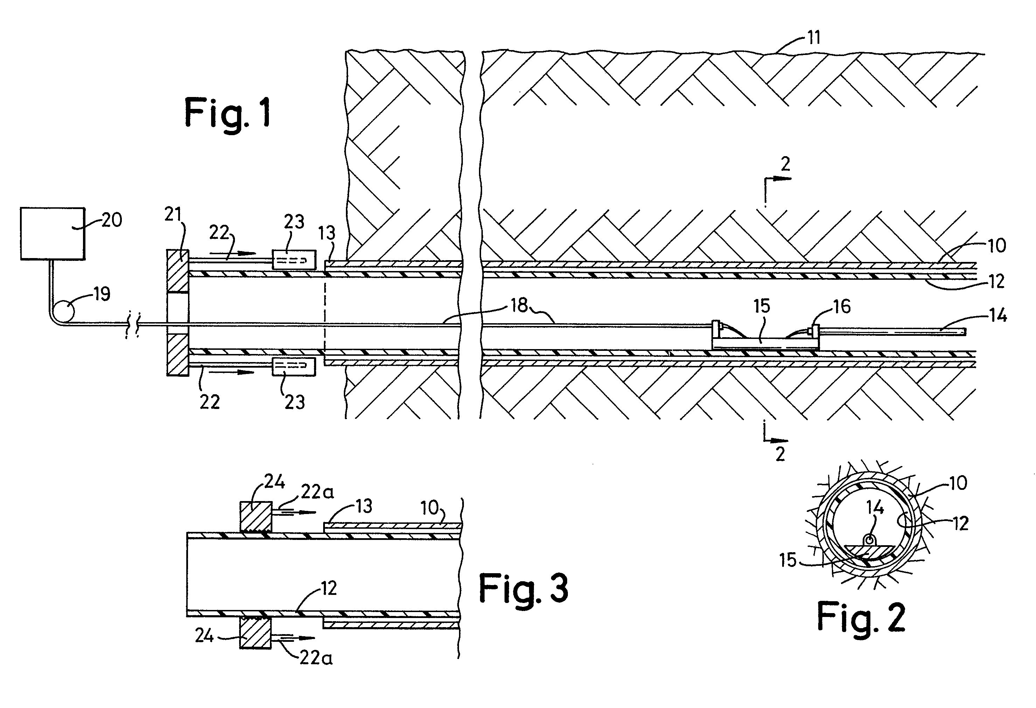

In Figure 1 is shown an iron gas main 10 which is located underground and may be several feet below ground level 11.

The gas main is to be lined with a polyethylene lining pipe or liner 12.

The length of polythene pipe 12 is chosen to be of larger external diameter than the internal diameter of the pipe 10. The polythene pipe is then heated and stretched so as to reduce its external diameter to say not more than 10% less than the internal diameter of the pipe 10.

Such a heat expandable polyethylene liner can be made from a tubular polyethylene billet with an OD slightly larger than that of the ID of the metal pipe by:

(a) Heating the billet to a temperature in the range 105°C to 120°C about 10 to 20°C below its crystalline melting point.

(b) Stretching the tubular billet at this temperature in the range $1.3 \times$ to $1.7 \times$.

(c) Cooling the stretched tube under tension to room temperature.

(d) Relieving the tension and permitting the tube to relax for a period of time (usually 2 to 3 days) until the dimension remains stable.

One end 13 of the iron pipe is exposed by excavating a cavity in the ground, the cavity being sufficiently large to feedthrough a long length of polyethylene liner which may, for example, be about 10 to 12 metres in length.

The polythene liner is then inserted into the pipe 10 leaving from 10 to 25% and preferably about 15% of the length of the pipe exposed so as to allow for axial shrinkage of the liner during the subsequent radial expansion within the pipe.

If the necessary radial expansion is 7% on the diameter the corresponding axial shrinkage will be $1.07^2 = 1.145$ or 14.5%.

A radiant heater 14 which is preferably in the form of an elongated tube of about 2m in length is then inserted into the liner on a carriage 15. The carriage 15 is shaped to conform to the shape of the liner so that it will slide freely along the liner and has a post 16 at one end on which the heater 14 is cantilevered.

At the other end is a second post 17 to which is attached a rope or cable 18 which may incorporate the wires carrying the power supply to the heater 14. Alternatively separate wires may be provided to the heater 14.

The rope or cable 18 passes around the pulley 19 and to a motor 20 which can provide a steady gentle pull on the rope 18 so as to pull the carriage or sledge 15 at a predetermined steady rate through the pipe. The motor 20 is preferably variable in speed so as to adjust the speed at which the carriage 15 moves through the pipe.

It has been found in practice that it is desirable to position the radiant heater 14 so that it is below the mid-level of the liner to ensure that the portion of the liner at the lowermost part of the pipe receives sufficient heat.

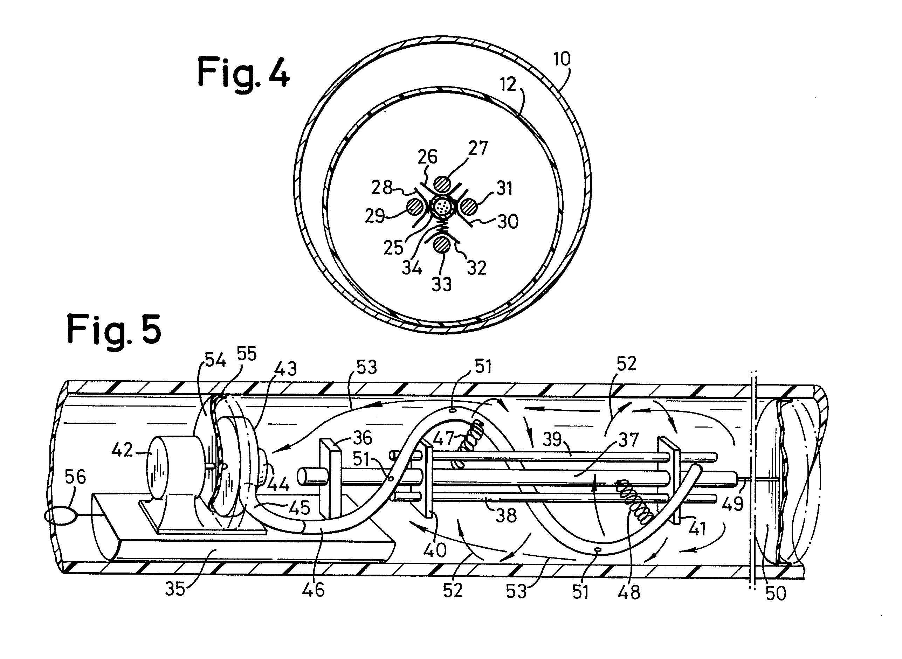

Since the liner is most likely resting on the bottom of the metal pipe this is where the more important heat sink is. For this reason this area should receive the highest heat intensity from the infra-red heater. Since the top of the liner is not initially in contact with the steel pipe - and therefore, has no heat sink - and at the same time is favoured as far as convective heat transfer is concerned this area should receive the lowest heat intensity from the radiant heater. This is achievable with the type of improved heating arrangement shown in Figure 4.

A central support tube 25 carries the electric wiring supplying four radiant rod heaters 27, 29, 31, 33 of the infra-red type, each being provided with a reflector 26, 28, 30, 32 respectively. The reflector 32 and heater rod 33 are located much further from the centre line of the pipe than the other heaters are.

The infra-red heaters preferably operate in the range 2 to 3 μ.i.e. in the medium range of infra-red spectrum.

An incentive for using infra-red heating is that polyethylene over a large range of wave lengths is somewhat transparent to infra-red radiation. This means that a significant proportion of the infra-red energy penetrates into the polyethylene liner wall directly causing it to heat up faster than if it was heated up by other means and which depend solely on conduction through the pipe wall.

The heater 14 is then pulled gently through the pipe and liner so as to cause the liner to expand and to return to its original diameter thus making an effective tight seal against the inner circumference of the pipe 10.

Because of drag and weight of the liner when such long lengths of liner are employed the expansion does not occur uniformly and fully. To overcome this problem an axial thrust or force may be applied to the liner 12, for example, by means of a block or bar 21 connected by rods 22 to jack devices 23 which may be set to provide a steady pull on the block 21 so as to overcome any drag or inertia of the liner as it proceeds into the pipe.

The jacks may be automatic devices which provide a constant pull or they may be operated manually and the force applied may be adjusted to suit particular lengths of liner and weights of liner and drag situations.

In Figure 3 an alternative method is shown of applying the axial force to the liner. A clamp 24 is used which again may be attached via rods 22a to suitable jacks similar to 23. By attaching the clamp 24 at a point fairly close to the entrance 13 of the pipe 10 a better control can be achieved on the axial force applied without distorting the liner.

A specific example of the application of this invention is given as follows:

An iron gas pipe 10 which had lain in the ground for 50 years was to be lined with a polythene liner so as to extend the life of the original pipe. It was important to retain the volume flow through the pipe and so the liner was selected to cause the minimum reduction cross-sectional area of the original pipe and had to be brought into firm contact with internal surface of the pipe 10.

The pipe 10 was a 20 ft (6m) 8 inch nominal diameter cast iron main with an average inside diameter of 8.4 inches (21.4 cm).

A polyethylene liner was selected with an outside diameter of 8.95 inches (22.7 cm) and a wall thickness of 0.290 inches (0.75 cm) produced from an ethylene octene-1 copolymer having a melt index of 1 and a density of 0.937 g/cc containing antioxidants and pigment.

The polyethylene liner was heated to a temperature of 113°C over a period of 1 hour and subsequently stretched 1.5×. After the liner had cooled to room temperature in this state the tension was released and the liner was permitted to relax. After three days, no further dimensional changes were noticable and the outside diameter of the liner remained 7.65 inches (19.4 cm).

A 25 ft (7.72 m) long section of this liner was inserted into the 20 ft (6 m) long cast iron pipe in such a way that the liner and pipe were flush at one end with the longer length liner extending 5 ft out of the other pipe end 13.

A heater, of the design shown in Figure 5, using four 1 ft long, 3/8 inch diameter 1 Kw cartridge heaters was slid into the liner so that the heater elements extended just outside the far end, with the carriage section supported inside the liner.

After the current was turned on and the heater cartridges had reached their maximum temperature, the motor was started and the heater carriage progressively moved along the pipe from right to left as shown in Figure 1. As soon as the end of the heater was about 6 inches inside the liner, the end of the liner was plugged and the air source was turned on. At the same time, axial pressure of 100 pounds per square inch of liner wall thickness was applied by means of the mechanism shown in Figure 1. By moving the heater carriage at a rate of 4 to 5 inches/minute along the liner, the liner expanded to provide a good fit with the internal diameter of the cast iron pipe. The axial pressure ensured that full radial expansion took place. In the course of the radial expansion and axial contraction the portion of the liner extending outside of the pipe contracted into the pipe.

In the process of butt welding it is normal to clamp two pieces of pipe adjacent to each other, face off their adjacent end surfaces, apply heat to these end surfaces to affect some melting and then bring the two face surfaces or ends of the pipes together so as to butt weld the two portions together. If this is done with pipe which has been stretched such as the liners used in the present invention, the heat will cause circumferential expansion of the pipe or liner at the joint which will create an undesirable bulge at the joint. To avoid this, during the butt welding the two ends of liner or pipe must be clamped as near as possible to the junction and the diameters at this point must be slightly compressed or reduced to counteract the tendency of the pipe to expand as it is heated. By maintaining the clamp compression close to and on each side of the joint during the welding and until the joint has cooled to room temperature, it is possible to make a butt fusion without any diameter distortions or bulges.

A preferred method of joining successive sections of the heat expandable liner by butt heat fusion involves

(a) circumferentially compressing the end of each stretched liner section to be joined about from 1 to 5% by clamping each such end with a circumferential clamp;

(b) positioning the clamps or stops on the equipment to permit the faced off ends of each liner section to protrude from the edge of each clamp about from O.5 to 1.5 times the thickness of the liner;

(c) heating the ends of the liner sections to be joined to the fusion temperature of the thermoplastic from which the liner is made; and

(d) bringing the ends of the heated liner section into contact under pressure and maintaining the contact until the temperature of the ends falls to substantially ambient temperature.

Typically the interfacial pressure applied during the fusion of the ends of the liner sections is about from 4O to 6O psi.

After joining successive sections, the beads on the inside and outside of the pipe are typically cleaned by conventional means. Internal cleaning is described, for example, in Brandt, U.S. Patent 3,8O5,311, hereby incorporated by reference.

Thus by successively joining sections it is possible to insert into the metal pipe a total length of heat expandable liner which should typically be about from 1O to 35% longer than the metal pipe to allow for longitudinal shrinkage which will vary depending on the required expansion.

In Figure 5 is shown an alternative form of heater design adapted to cause the heat to circulate around the interior of the pipe so as to cause uniform heating of the whole pipe. As shown the heater is mounted on a carriage 35 in the form of a sledge which can be pulled through the pipe. The sledge preferably is in cross-section of substantially the same curved section as the pipe.

The sledge has a post 36 on which is mounted a support bar 37 for two infra-red heaters 38 and 39 supported from the bar 37 by means of supported brackets 4O, 41. The heaters are preferably radiant heaters.

Mounted on the carriage 35 is an electric blower motor 42 driving a blower 43 having an intake 44 and an outlet 45. Connected to the outlet 45 of the blower is a spiral air manifold 46 which is coiled around the heater assembly as shown, and supported from the support bar 37 by springs 47 and 48.

Attached to the support bar 37 by a connector 49 is a trailing rubber gasket 5O. Gasket 5O is in sealing contact with the internal surface of the pipe and assists in maintaining the heat within the section of liner being heat treated. The spiral manifold or air tube 46 has a number of orifices 51 throughout its length which a position to create a circumferential air flow within the pipe, in the direction shown by arrows 52, 53. A second gasket 54 is mounted in a support 55 at the front end of the heater sledge and a ring 56 is provided at the front end for attaching a cable to pull the sledge through the pipe.

In operation as the carriage is moved slowly through the liner, the heater is operated and the blower is also operated so that hot air or other gas is caused to circulate and to distribute the heat uniformly around the interior of the liner. If the pipe which is being lined is in contact with the earth, at its lower side, then it is desirable to arrange the holes in the spiral pipe so that a greater amount of heat is conveyed to the lower part of the pipe, which is normally colder and a lesser amount to the upper part.

Use of the gaskets 5O, 54 ensures that the heat applied to successive sections of the liner is constant and is not affected by the distance of the sledge from the end of the pipe.

Gasket 5O is preferably located some distance (e.g. O.5 M) away from the heater to allow the pipe surface to set.

The gasket 54, being located between the motor 42 and the heater provides thermal protection for the motor.

## Claims

1. A method of lining a tubular structure or pipe comprising the step of inserting into the tubular structure (1O) one or more sections of heat expandible liner (12) having an outside diameter less than the internal diameter of the pipe, the liner being made of thermoplastic polymer which, when freely or fully expanded, would have an outside diameter greater than the internal diameter of the tubular structure, and expanding the liner within the tubular structure by the application of heat, characterised by this, that the polymer is a non-cross-linked polymer.

2. A method according to claim 1 characterised by this that to expand the liner it is heated from the inside of the liner with a radiant infra-red heater (14; 27-33; 38, 39).

3. A method according to claim 2 characterised by this, that the heater is designed in such a way that the rate of temperature rise around the circumferential periphery of the liner is approximately uniform.

4. A method according to claim 2 or claim 3, characterised by this, that the radiant heater is inserted into the liner (12), either to an intermediate point or at the end of the pipe (1O), and moved through the pipe towards an open end from said intermediate point or from said one end at a rate such as to allow for full expansion of the polymer liner into contact with the internal surface of the pipe, so as to ensure that the longitudinal shrinkage which is associated with radial expansion can take place unhindered.

5. A method according to any preceding claim characterised in that an axial force is applied at the free end of the pipes(1O) so as to overcome frictional drag forces from the weight of the not yet expanded section of the liner(12), to overcome the resistance forces from pinch points along the pipe and in this way assist in the movement of the unexpanded liner section to accomplish the required axial shrinkage.

6. A method according to claim 5 characterised in that the axial force is adapted to produce slight axial compression in the zone of the expansion during the entire operation.

7. A method of lining a pipe with a thermoplastic copolymer comprises:-

(a) selecting a tubular copolymer liner (12) of outside diameter greater than the internal diameter of the pipe (12).

(b) heating and stretching the tubular copolymer lining (12) until its outside diameter is less than the internal diameter of the pipe.

(c) inserting the tubular copolymer liner (12) into the pipe (1O), characterised by

(d) inserting a radiant heater (14; 27-33; 38, 39) into the lining either to an intermediate point or to one end of the pipe; and

(e) moving the radiant heater through the pipe towards an open end from said intermediate point or from said one end at a rate such as to allow for full expansion of the copolymer lining changes from a heat unstable to a heat stable state.

8. A method according to any of claims 1 to 7 characterised in that successive sections of the heat expandible liner are joined by butt heat fusion or butt solvent welding without affecting the outside diameter of the heat expandible pipe.

9. A method of preparing an expandible polyethylene liner for use with the method of any of claims 1 to 7 comprising selecting a tubular polyethylene billet with an outside diameter slightly larger than that of the internal diameter of the metal pipe, characterised by

(a) heating the billet to a temperature in the range 1O to 2O°C below its crystalline melting point

(b) stretching the tubular billet at this temperature in the range 1.3 to 1.7 times its original length;

(c) relieving the tension and permitting the tube to relax for a period of time until the dimension remains stable.

1O. A radiant heater for use in the method claimed in any of claims 1 to 9 characterised by being in the form of a rod or bar (14; 27-33; 38, 39) supported at one end on a carriage (15; 35) which is shaped to conform to the shape of the liner (12) and is slid along the liner.

11. A method according to any of claims 1 to 9 characterised in that said liner is of a material selected from polythene, polypropylene, polybutene; copolymers of ethylene and vinyl esters of aliphatic carboxylic acids such as vinyl acetate and vinyl propionate; copolymers of ethylene and alkyl acrylate and methyl methacrylate; copolymers of ethylene and other alpha-olefins such as propylene, butene, hexene and octene copolymers of ethylene and ethylenically unsaturated carboxylic acids such as acrylic acid, methacrylic acid and the like.

12. A method according to any of claims 1 to 9 characterised in that the liner is made of polyethylene.

13. A process for lining a pipe with a thermoplastic polymer which comprises:

(a) selecting a substantially non-cross linked, thermoplastic tubular polymer liner of outside diameter greater than the internal diameter of the pipe;

(b) heating and stretching the tubular polymer liner at a temperature about from 1O to 3O centigrade degrees below the melting point of the polymer until its outside diameter is less than the internal diameter of the pipe and cooling it under tension;

(c) inserting the tubular polymer liner into the pipe and characterised by

(d) heating the polymer liner sequentially from one end to the other and uniformly about is circumference to a temperature sufficient to relieve the internal strain applied by the stretching and cause the liner to expand while applying positive axial pressure on at least one end of the liner.

14. A process of claim 13 characterised in that the axial pressure is from 1OO to 4OO pounds per square inch of the cross-sectional area of the pipe wall.

15. A process of claim 13 characterised in that the polymer liner is uniformly heated by passing therethrough an apparatus having anterior and posterior ends and comprising:

(a) a platform (35);

(b) at least one radiant heating element (38, 39) mounted on the platform;

(c) a spiral air tube (46) mounted on the platform to encircle the heating element at least once in a direction axial to the liner, the air tube having a plurality of apertures (51) formed therein positioned to create a circumferential air flow within the pipe;

(d) electrical and pressurized air sources (43) functionally connected to the radiant heating element (38, 39) and air tube (46), respectively;

(e) means for moving the platform (35) through the pipe (1O); and

(f) a diametric gasket (5O) positioned anterior to the heating element to separate the apparatus from the portion of the pipe anterior to the heating element; while heating the element to a temperature of at least about 1OOO°F and forcing gas through the air tube to provide a uniform circumferential flow.

16. A process of claim 15 characterised in that the apparatus is drawn through the pipe.

17. A process of claim 13 characterised in that successive sections of liner (1O) are joined by

(a) circumferentially compressing the end of each stretched liner section to be joined about from 1 to 5% by clamping each such end with a circumferential clamp;

(b) positioning the clamps to permit the ends of each liner section to protrude from the edge of each clamp about from 0.5 to 1.5 times the thickness of the liner;

(c) heating the ends of the liner sections to be joined to the fusion temperature of the thermoplastic from which the liner is made; and

(d) bringing the ends of the heated liner section into contact and maintaining the contact until the temperature of the ends falls to substantially ambient temperature.

18. A process of claim 1 characterised in that the stretched liner is heated in the presence of an inert gas.

19. An apparatus for internally heating a substantially cylindrical pipe, the apparatus having anterior and posterior ends and characterised by

(a) a platform (35);

(b) at least one radiant heating element (38, 39) mounted on the platform;

(c) a spiral air tube (46) mounted on the platform (35) to encircle the heating element at least once in a direction axial to the liner, the air tube having a plurality of apertures (51) formed therein positioned to create a circumferential air flow within the pipe;

(d) electrical and pressurized air sources (43) functionally connected to the radiant heating element and air tube, respectively;

(e) means for moving the platform through the pipe; and

(f) a diametric gasket (50) positioned anterior to the heating element to separate the apparatus from the portion of the pipe anterior to the heating element;

20. A process for joining two sections of thermoplastic pipe which has been longitudinally stretched to impart strain which, upon heating, causes the pipe to expand circumferentially and contract longitudinally, which process is characterised by:-

(a) circumferentially compressing the end of each stretched liner section to be joined about from 1 to 5% by clamping each such end with a circumferential clamp;

(b) positioning the clamps to permit the ends of each liner section to protrude from the edge of each clamp about from 0.5 to 1.5 times the thickness of the liner;

(c) heating the ends of the liner sections to be joined to the fusion temperature of the thermoplastic from which the liner is made; and

(d) bringing the ends of the heated liner section into contact and maintaining the contact until the temperature of the ends falls to substantially ambient temperature.

21. A process of claim 20 characterised in that the pipe to be joined has an overall diameter of about 8 inches and the distance between end clamps is about from 0.25 to 0.75 inches.

22. An apparatus of claim 18 characterised by at least two radiant heating elements, positioned equidistant from the center of the pipe.

23. An apparatus of claim 18 further characterised by a diametric gasket (54) positioned posterior to the heating element, to seal the apparatus from the portion of the pipe behind the heating element.

24. An apparatus of claim 18 characterised in that the air tube and the heating element are mounted on a common suspension.

0241297

Fig.1

Fig.2

Fig.3

# Fig. 4

# Fig. 5

0241297